# EUROPEAN PATENT SPECIFICATION

(11) **EP 3 147 924 B1**
(45) Date of publication and mention of the grant of the patent: **10.06.2020**
(21) Application number: 15796257.2
(22) Date of filing: 13.03.2015
(51) Int. Cl.: H01H 33/66, H01H 33/662, B60L 3/00, H02B 13/075, H01H 33/32, H01H 33/38, H01H 33/666

(54) **UNIT SWITCH, SWITCHING DEVICE, AND RAILROAD CAR**
EINHEITSSCHALTUNG, SCHALTVORRICHTUNG UND EISENBAHNWAGEN
COMMUTATEUR UNITAIRE, DISPOSITIF DE COMMUTATION ET WAGON FERROVIAIRE

(30) Priority: 22.05.2014 JP 2014105784
(43) Date of publication of application: 29.03.2017
(73) Proprietor: Hitachi Industrial Equipment Systems Co., Ltd., Tokyo 101-0022 (JP)
(72) Inventor: SATO Takashi, Tokyo 100-8280 (JP); MORITA Ayumu, Tokyo 100-8280 (JP); TSUCHIYA Kenji, Tokyo 100-8280 (JP); WATANABE Makoto, Tokyo 100-8280 (JP); SHIMADA Yoshinori, Tokyo 100-8280 (JP)
(74) Representative: Strehl Schübel-Hopf & Partner
(86) International application number: PCT/JP2015/057404
(87) International publication number: WO 2015/178072

(56) References cited:
- EP-A1- 2 664 481
- EP-A2- 1 863 138
- JP-A- S56 128 528
- JP-A- 2005 251 413
- JP-A- 2009 021 124
- JP-A- 2013 176 294
- JP-A- 2014 002 876

## Description

### TECHNICAL FIELD

The present invention relates to an electric system for a railroad car including a switching device and comprising a unit switch, and a railroad car, wherein the switching device suitable for a switching apparatus for receiving and distributing power is mounted on a railroad car.

### BACKGROUND ART

Examples of a conventional switching device are described using a configuration of a solid insulated switchgear described in Patent Literature 1.

The conventional switching device described in Patent Literature 1 has various configurations by combining a unit switch part in which a vacuum valve is molded with an insulating material such as a silicone rubber or an epoxy resin, a solid insulated bus, a solid insulated operating mechanism case, and the like.

In such a configuration, the unit switch part includes one electrical connection part on each of movable and fixed sides, and each electrical connection part includes a conductor and a contact for conducting current in a central part thereof, and a conical surface along a solid insulator for securing electrical insulation in a peripheral part.

### CITATION LIST

### PATENT LITERATURE

PATENT LITERATURE 1: JP-A-2005-251413

### SUMMARY OF INVENTION

### TECHNICAL PROBLEM

The unit switch part of the solid insulated switchgear described in Patent Literature 1 described above includes one electrical connection part on each of movable and fixed sides. In order to connect two circuits to one of the electrical connection parts, it is necessary to connect a T-shaped branch solid insulated bus to the electrical connection part once and connect the two circuits to the branch solid insulated bus. Therefore, the number of components and the size of the device may be increased.

The present invention has been made in view of the above problems, and an object of the present invention is to provide a switching device which can prevent the increase in the number of components and the increase in the size of the device even when two circuits are connected to one of the electrical connection parts, and a railroad car which carries them.

EP 1 863 138 A2 discloses a switching device with the features in the preamble of present claim 1. Other conventional devices are described in JP 2013 176294 A and JP S56 128528 A.

### SOLUTION TO PROBLEM

To achieve the object, the present invention provides the electric system for a railroad car including a switching device as defined in claim 1. In the unit switch of the claimed electric system a vacuum interrupter includes at least a movable electrode and a fixed electrode disposed so as to face each other, the vacuum interrupter being molded with a solid insulator, the unit switch having two electrical connection parts on the fixed electrode side and one electrical connection part on the movable electrode side, and the unit switch including a current collecting mechanism and an insulated operating rod for driving the movable electrode so as to enable opening and closing, the current collecting mechanism and the insulated operating rod being provided on the movable electrode side.

Further, in the switchgear or switching device of the present invention, three unit switches having the above configuration are disposed in parallel, and one of the electrical connecting parts on the fixed electrode side of each unit switch is electrically connected to one another by a circuit connection bus. Three electromagnetic operating units are disposed in parallel to and below the corresponding unit switches so that the movable electrode of each unit switch is independently opened and closed. In addition, a pantograph circuit is connected to the remaining electrical connection part on the fixed electrode side of a first unit switch of the three unit switches, and an AC circuit or a DC circuit is connected to the electrical connection part on the movable electrode side of the first unit switch. An arrester is connected to the remaining electrical connection part on the fixed electrode side of a second unit switch, and a circuit other than the AC circuit or the DC circuit connected to the electrical connection part on the movable electrode side of the first unit switch is connected to the electrical connection part on the movable electrode side of the second unit switch. A ground circuit is connected to the electrical connection part on the movable electrode side of a third unit switch.

A railroad car using the present invention includes: a plurality of car units which are supplied power from a power supply line through a pantograph, in which main power supply apparatuses constituting a power supply unit are dispersedly mounted on a plurality of cars, and in which the cars are coupled to one another; a cable which is disposed to pass current between the car units; and the electric system with the switching device having the above configuration, which is provided on the middle of the cable and disconnects current between the car units.

### ADVANTAGEOUS EFFECTS OF INVENTION

According to the present invention, an increase in the number of components and an increase in the size of the device can be prevented even when two circuits are connected to one of the electrical connection parts.

### BRIEF DESCRIPTION OF DRAWINGS

[FIG. 1] FIG. 1 is a vertical cross-sectional view illustrating a unit switch according to Example 1 useful to understand the present invention.
[FIG. 2] FIG. 2 is a partial sectional view illustrating a state where an electromagnetic operating unit is provided and cable heads, an arrester are before connecting to the unit switch according to Example 1.
[FIG. 3] FIG. 3 is a side view illustrating the unit switch according to Example 1.
[FIG. 4] FIG. 4 is an electrical circuit diagram for the unit switch according to Example 1.
[FIG. 5] FIG. 5 is a plan view of a cross section of a switching device according to Example 2 useful to understand the present invention.
[FIG. 6] FIG. 6 is a front elevation of a cross section of the switching device according to Example 2.
[FIG. 7] FIG. 7 is a partial sectional side view illustrating the switching device according to Example 2.
[FIG. 8] FIG. 8 is an electrical circuit diagram for the switching device according to Example 2.
[FIG. 9] FIG. 9 is a control circuit block diagram for a switching device according to an embodiment of the present invention.
[FIG. 10] FIG. 10 is car formation in a railroad car according to Example 3 useful to understand the present invention.
[FIG. 11] FIG. 11 is an arrangement of a unit switch adopted for the railroad car according to Example 3.
[FIG. 12] FIG. 12 is a side view of FIG. 11.
[FIG. 13] FIG. 13 is a cross-sectional view taken along line A-A' of FIG. 12.

### DESCRIPTION OF EMBODIMENTS

A unit switch, a switching device, and a railroad car of the present invention will be described based on illustrative examples and an embodiments illustrated in the drawings. In each example and the embodiment, the same reference numerals are used for the same components.

### EXAMPLE 1

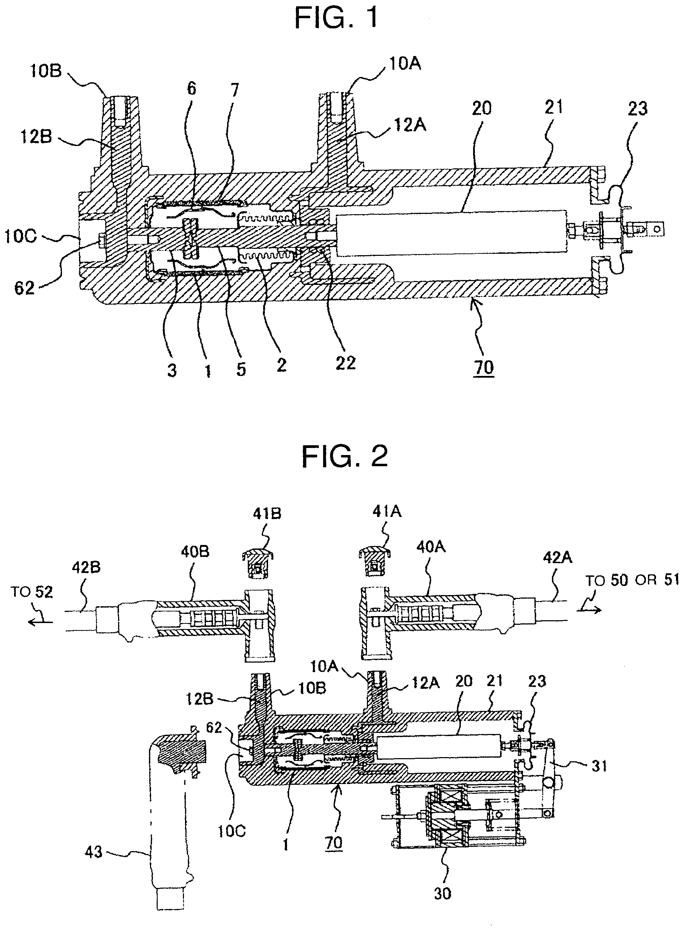

FIGS. 1 to 4 illustrate Example 1 of a unit switch useful to understand the present invention.

As illustrated in FIG. 1, a unit switch 70 of the present example includes: a vacuum interrupter 1 comprising a fixed electrode 3 and a movable electrode 5 which are disposed so as to face each other, an arc shield 6, a ceramic insulating cylinder 7, and bellows 2; a bushing conductor 12A which is a center conductor connected to the movable electrode 5; a bushing conductor 12B which is a center conductor connected to the fixed electrode 3; a solid insulator 21 such as epoxy resin with which the vacuum interrupter 1 and the bushing conductors 12A, 12B are molded; a current collecting mechanism such as a spring contact 22 on a movable side of the vacuum interrupter 1; and an air insulated operating rod 20 for driving the movable electrode 5 of the vacuum interrupter 1 so as to freely contact with and separate from (open and close with respect to) the fixed electrode 3.

A space around the air insulated operating rod 20 is sealed by the solid insulator 21 and a flexible part such as rubber bellows 23, and insulation gas such as dry air is enclosed in the space. The space may be sealed by using a straight seal or a moisture permeable flexible film instead of the rubber bellows 23, or the space around the air insulated operating rod 20 may be an atmospheric condition by securing a creeping distance of the air insulated operating rod 20 sufficiently and largely.

The unit switch 70 of the present example includes two electrical connection parts 10B and 10C on the fixed electrode 3 side of the vacuum interrupter 1, and one electrical connection part 10A on the movable electrode 5 side. The electrical connection part 10B on the fixed electrode 3 side and the electrical connection part 10A on the movable electrode 5 side are cone-shaped bushings, and the electrical connection part 10C on the fixed electrode 3 side has a concave shape. That is, one electrical connection part 10B on the fixed electrode 3 side is a connection part having a coaxial conical convex shape, and the other one electrical connection part 10C is a connection part having a coaxial cylindrical concave shape. The bushing conductor 12B, which is a center conductor of both electrical connection parts 10B, 10C, is integrally formed and molded. A through-hole (not illustrated) is provided in a center bottom part of the center conductor of the electrical connection part 10C which is a connection part having a coaxial cylindrical concave shape. The fixed electrode 3 of the vacuum interrupter 1 is fastened by a bolt 62 inserted through the through-hole, and an inner surface of the connection part having a coaxial cylindrical concave shape of the electrical connection part 10C is an electrical contact surface (the electrical connection part 10C is electrically connected with the fixed electrode 3 by fastening with the bolt 62).

The electrical connection part 10C on the fixed electrode 3 side may be a cone-shaped bushing like the electrical connection part 10B.

As illustrated in FIG. 2, cable heads 40A and 40B are connected to the electrical connection part 10A on the movable electrode 5 side and the electrical connection part 10B on the fixed electrode 3 side of the unit switch 70, respectively, the cable heads 40A and 40B having cables 42A and 42B fitted to tip ends thereof, respectively. Upper parts of the cable heads 40A and 40B are sealed with insulation plugs 41A and 41B, respectively. The cable 42A is connected to an AC circuit (e.g., a transformer) 50 or a DC circuit (e.g., a converter) 51 described later, and the cable 42B is connected to a pantograph circuit 52 described later. An arrester 43 is connected to the remaining electrical connection part 10C on the fixed electrode 3 side.

On the other hand, an electromagnetic operating unit 30 is disposed below the unit switch 70. The electromagnetic operating unit 30 is connected to the air insulated operating rod 20 through a lever 31. The air insulated operating rod 20 is operated through the lever 31 by electromagnetic operating unit 30, thereby performing opening and closing (contact and separation) operation of the fixed electrode 3 and the movable electrode 5 of the vacuum interrupter 1.

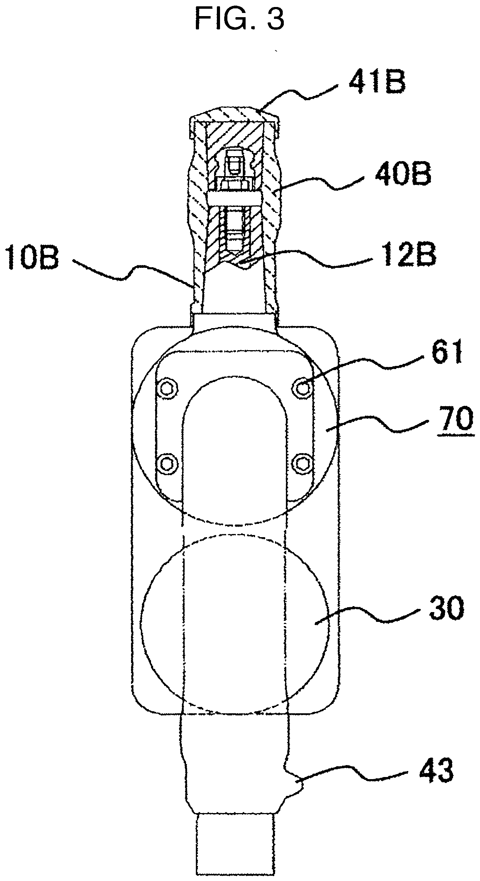

FIG. 3 is a side view of the unit switch 70 illustrated in FIG. 2 (a diagram viewed from the left side of FIG. 2 in a state where the cable heads 40A and 40B illustrated in FIG. 2 are connected to the electrical connection parts 10A and 10B). Center axes of the electrical connection part 10B, the unit switch 70, the electromagnetic operating unit 30, and the arrester 43 are disposed on the same plane (in a state where the axes in the vertical direction of the arrester 43, the electromagnetic operating unit 30, the unit switch 70, and the electrical connection part 10B are disposed on the same plane, and the axis of each apparatus is not displaced horizontally in FIG. 3).

This arrangement can suppress a width of the unit switch 70 in the right and left direction of FIG. 3, and can suppress an air flow resistance when the unit switch 70 is disposed on a roof of the railroad car considering FIG. 2 as a plan view.

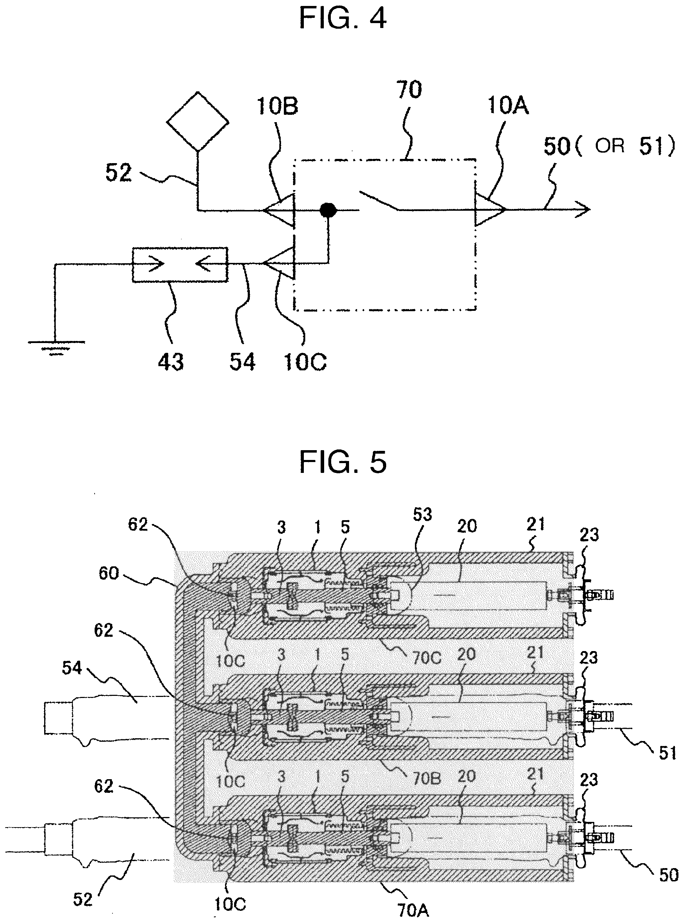

FIG. 4 is an electrical circuit diagram of the present example. A pantograph circuit 52 is connected to the electrical connection part 10B of the unit switch 70, an AC circuit 50 is connected to the electrical connection part 10A of the unit switch 70, and an arrester circuit 54 is connected to the electrical connection part 10C of the unit switch 70.

Conventionally, when two circuits are connected to one of the electrical connection parts, it is necessary to connect a T-shaped branch solid insulated bus to the electrical connection part once and connect the two circuits to the branch solid insulated bus. However, according to such a configuration of the present example, it is not necessary to connect the T-shaped branch solid insulated bus. Thus, the number of components is not increased and an increase in the size of the device can be prevented even when two circuits are connected to one of the electrical connection parts.

### EXAMPLE 2

FIGS. 5 to 8 illustrate a switching device of Example 2 useful to understand the present invention.

As illustrated in these figures, in a switching device of the present example, three unit switches 70 (70A, 70B, 70C) having the configuration described in Example 1 are disposed in parallel. Electrical connection parts 10C on respective fixed electrode 3 sides of first to third unit switches 70A, 70B, 70C are electrically connected to one another by an inter-circuit connection bus 60, and three electromagnetic operating units 30 are disposed in parallel to and below the corresponding first to third unit switches 70A, 70B, 70C, so that movable electrodes 5 of the unit switches 70A, 70B, 70B are independently opened and closed. In addition, a pantograph circuit 52 is connected to the remaining electrical connection part 10B on the fixed electrode 3 side of the first unit switch 70A, and an AC circuit (e.g., a transformer) 50 or a DC circuit (e.g., a converter) 51 is connected to an electrical connection part 10A on the movable electrode 5 side of the first unit switch 70A. An arrester (arrester circuit 54) is connected to the remaining electrical connection part 10B on the fixed electrode 3 side of the second unit switch 70B, and a circuit other than the AC circuit 50 or the DC circuit 51 connected to the electrical connection part 10A on the movable electrode 5 side of the first unit switch 70A is connected to an electrical connection part 10A on the movable electrode 5 side of the second unit switch 70B. A ground circuit 53 is connected to an electrical connection part 10A on the movable electrode 5 side of the third unit switch 70C.

As illustrated in FIG. 5, three circuits of the first to third unit switches 70A, 70B, 70C having the configuration described in Example 1 are disposed in the vertical direction in the figure. Each of electrical connection parts 10C is connected by the inter-circuit connection bus 60. In the present example, the ground circuit 53 is connected to the movable electrode 5 side of the third unit switch 70C illustrated in the upper side of the figure. In the second unit switch 70B illustrated in the middle of the figure, the DC circuit 51 is connected to the movable electrode 5 side, and the arrester circuit 54 is connected to the fixed electrode 3 side. In the first unit switch 70A illustrated in the lower side of the figure, the AC circuit 50 is connected to the movable electrode 5 side, and the pantograph circuit 52 is connected to the fixed electrode 3 side.

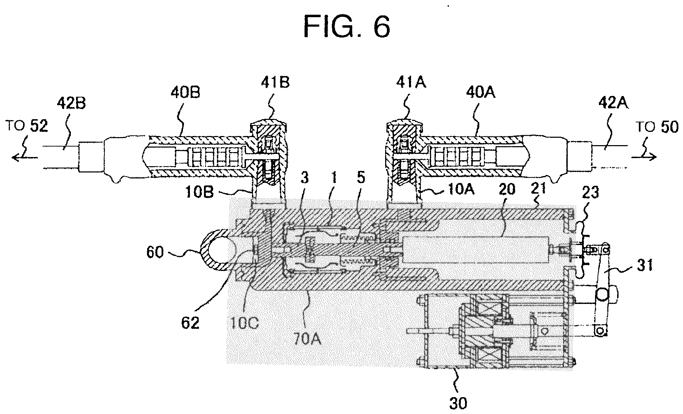

As illustrated in FIG. 6, the pantograph circuit 52 is connected, through a cable head 40B and a cable 42B, to the electrical connection part 10B on the fixed electrode 3 side of a vacuum interrupter 1 and in the upper side of the first unit switch 70A in the figure, and the AC circuit 50 is connected, through the cable head 40A and the cable 42A, to the electrical connection part 10A on the movable electrode 5 side of the vacuum interrupter 1.

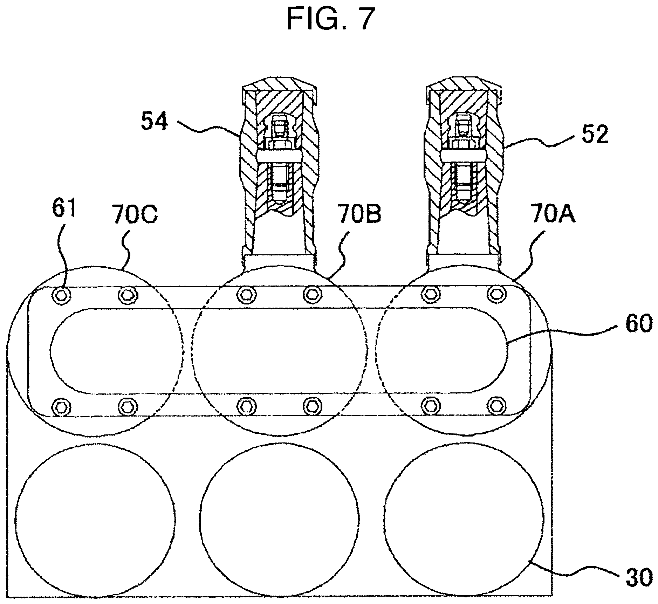

FIG. 7 is a side view of Example 2. The inter-circuit connection bus 60 is fixed to the first to third unit switches 70A, 70B, 70C with bolts 61. The electrical connection part in the upper side of the third unit switch 70C on the left side of the figure can be omitted.

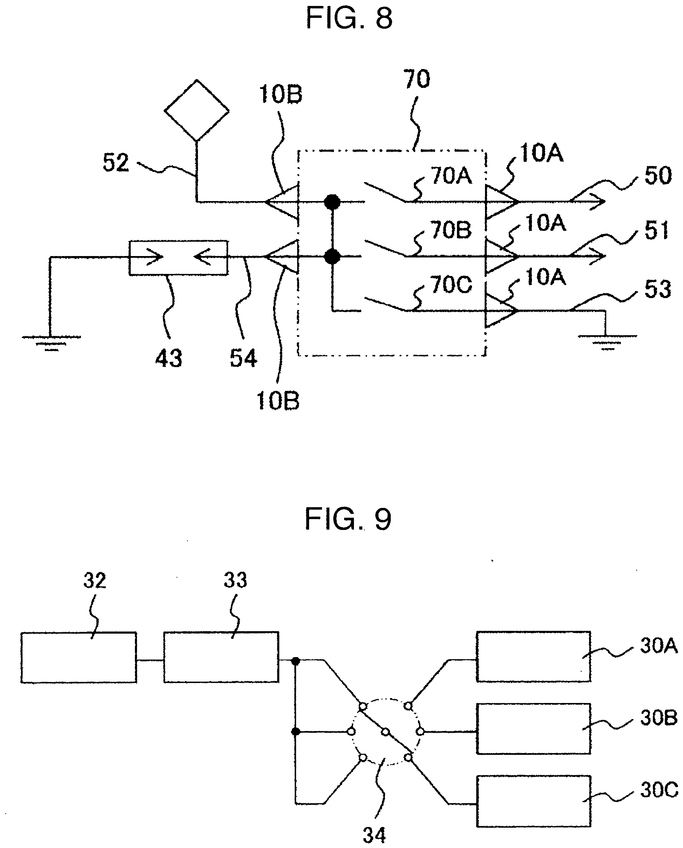

FIG. 8 is an electrical circuit diagram of the present example. In the first unit switch 70A, the pantograph circuit 52 is connected to the electrical connection part 10B, and the AC circuit 50 is connected to the electrical connection part 10A. In the second unit switch 70B, the arrester circuit 54 is connected to the electrical connection part 10B, and the DC circuit 51 is connected to the electrical connection part 10A. In the third unit switch 70C, the ground circuit 53 is connected to the electrical connection part 10A.

The present example can obtain the effect similar to the effect obtained in Example 1, and can reduce the size of an AC and DC switching device including the arrester and an emergency grounding device.

### EMBODIMENT

FIG. 9 is a control circuit block diagram for a switching device in the Eembodiment of the present invention.

As illustrated in the figure, in the present embodiment, an opening and closing signal from a set of a power supply capacitor 32 and a control board 33 in an electromagnetic operating unit 30 is distributed to a plurality of electromagnets of electromagnetic operating units 30A, 30B, 30C by an exclusive changeover switch 34.

In other words, in the present embodiment, each of the electromagnetic operating units 30 includes the power supply capacitor 32 and a control board 33, and the opening and closing signal from a set of the power supply capacitor 32 and the control board 33 in the electromagnetic operating unit 30 is distributed to each of the electromagnets of electromagnetic operating units 30A, 30B, 30C by the exclusive changeover switch 34.

According to the present embodiment, by only providing one set of the power supply capacitor 32 and the control board 33 in the electromagnetic operating unit 30, the first to third unit switches 70A, 70B, 70C can be operated by switching the changeover switch 34. The electromagnets of electromagnetic operating units 30A, 30B, 30C are not operated simultaneously, the electrical interlocking can be effected, and therefore a malfunction can be prevented.

### EXAMPLE 3

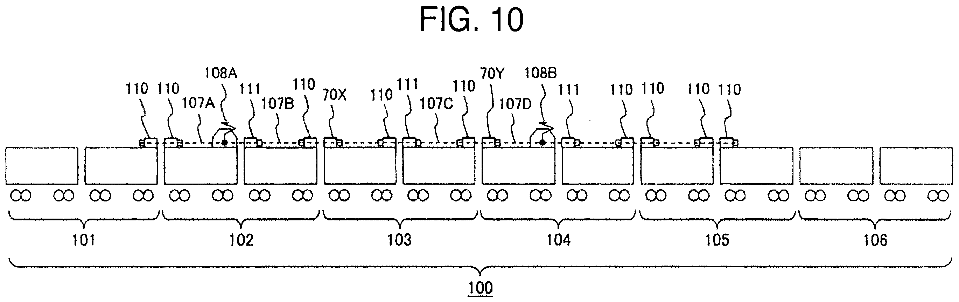

As Example 3 of the present invention, an example of mounting the unit switch 70 described in Example 1 on a railroad car will be described with reference to FIGS. 10 to 13. Although not described in detail particularly, it is the same as when the switching device described in Example 2 is mounted on the railroad car.

FIG. 10 illustrates a car formation when the unit switch 70 described in Example 1 is mounted on the railroad car.

As illustrated in the figure, a railroad car 100 of the present example is made up of 12 cars, one car unit consists of two cars, and the railroad car 100 consists of a first car unit 101, a second car unit 102, a third car unit 103, a fourth car unit 104, a fifth car unit 105, and a sixth car unit 106.

Although not illustrated particularly, each of the car units 101 to 106 has a power supply unit and an auxiliary power supply device comprising main power supply apparatuses such as a main transformer and a main converter, and an auxiliary apparatus such as an air compressor.

The power supply units mounting each of the car units 101 to 106 connect with high voltage cables 107A, 107B, 107C, 107D which are connected through high voltage joints 110 and three branch type high voltage cable heads 111, power is supplied to the high voltage cables 107A, 107B, 107C, 107D through pantographs 108A and 108B provided on roofs of the cars from a power supply line (not illustrated), and then the power is supplied to the power supply units of the car units 101 to 106 from the high voltage cables 107A, 107B, 107C, 107D.

The pantograph 108A is provided on the roof of the third car which is one car of the second car unit 102. The pantograph 108B is provided on the roof of the seventh car which is one car of the fourth car unit 104. Since the high voltage cables 107A, 107B, 107C, 107D are disposed across between cars, they have flexibility to allow a change, bending, and an eccentric gauge when the railroad car passes a curve, etc.

In the present example, unit switches 70X and 70Y for electrically disconnecting between car units are provided on the same plane as the roof of the car, the unit switch 70X being provided on the roof of the fifth car in the third car unit 103 and between the high voltage cables 107B and 107C, and the unit switch 70Y being provided on the roof of the seventh car in the fourth car unit 104 and between the high voltage cables 107C and 107D.

A case (described later) for housing each of the unit switch 70X on the roof of the fifth car and the unit switch 70Y on the roof of the seventh car, that is, the unit switches 70X and 70Y is directly fixed on the roof 72 of the car by fixing means such as a bolt without using an insulator or the like, and is provided so that an opening and closing direction of the unit switches 70X and 70Y is a horizontal direction.

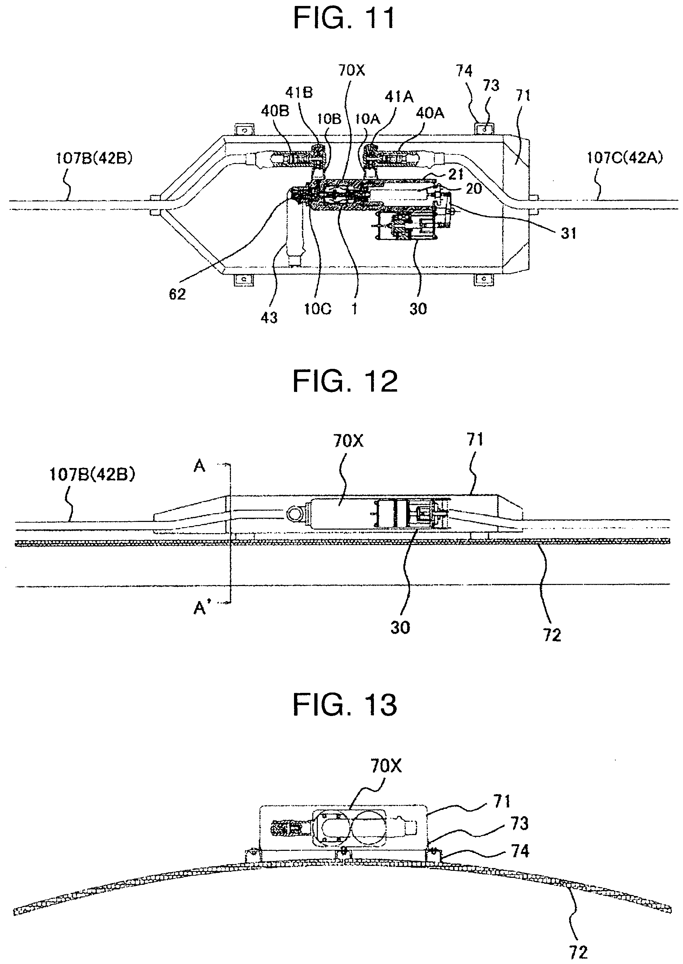

Next, arrangement states of the unit switches 70X and 70Y described above will be described with reference to FIGS. 11 and 12.

The unit switches 70X and 70Y have the same configuration. Therefore, FIGS. 11 and 12 illustrate the unit switch 70X as an example.

As illustrated in these figures, the unit switch 70X includes a vacuum interrupter 1, the fixed side of the vacuum interrupter 1 is connected to the high voltage cable 107B (equivalent to the cable 42B of Example 1), and the movable side thereof is connected to the high voltage cable 107C (equivalent to the cable 42A of Example 1). The movable side of the vacuum interrupter 1 is connected to the electromagnetic operating unit 30 through a link mechanism such as lever 31. By the operation of the electromagnetic operating unit 30, the movable electrode 5 of the vacuum interrupter 1 is operated, and the opening and closing (turning on and cutting off) operation is performed with respect to the fixed electrode 3 (FIG. 11 illustrates the turning-on state).

Instead of the electromagnetic operating unit 30, a pneumatic operating unit using an air cylinder can be used to operate the vacuum interrupter 1.

In the present example, a case 71 includes the unit switch 70X and the electromagnetic operating unit 30 which are disposed substantially in parallel to each other, and a part of the high voltage cable 107C. The case 71 is provided and fixed on the roof 72 of the car, and thereby the unit switch 70X and the electromagnetic operating unit 30 can be fixed on the roof 72 of the car without using an insulator or the like.

FIG. 13 illustrates details of a state where the case 71 which houses the unit switch 70X and the electromagnetic operating unit 30 is fixed on the roof 72 of the car.

As illustrated in the figure, the case 71 which houses the unit switch 70X and the electromagnetic operating unit 30 is supported by a supporting plate 73, the supporting plate 73 is fixed to U-shaped metal fittings 74, which are directly embedded in the roof 72 of the car, by using bolts or the like, and thereby the case 71 is fixed on the roof 72 of the car.

Such a configuration enables the case 71 which houses the unit switch 70X and the electromagnetic operating unit 30 to be directly fixed to the roof 72 of the car.

According to such a configuration of the present example, the number of components is not increased and an increase in the size of the device can be prevented even when two circuits are connected to one of the electrical connection parts. Furthermore, even when a failure such as grounding occurs in the high voltage cable, the section including the failure point can be automatically separated from normal section by releasing a contact between the movable electrode 5 and the fixed electrode 3 of the vacuum interrupter 1 based on trip signal from an operator room. Advantageously, it is no longer required that an operator climbs on the roof 72 of the car for separation of high voltage cable section including the failure from normal section.

The unit switches 70X and 70Y of the present example are fixed on the same plane as the roof 72 of the car, that is, the vacuum interrupter 1 and the electromagnetic operating unit 30 are housed in one case 71, and the case 71 is directly fixed to the roof 72 of the car. Therefore, it is advantageous in that the height becomes lower in comparison with the case where the unit switches are fixed by using an insulator.

The present invention is not limited to the embodiments described above, and includes various modifications. For example, the embodiments described above are those described in detail in order to better illustrate the present invention and are not intended to be limited to necessarily provide all the configurations described.

### REFERENCE SIGNS LIST

1 ... vacuum interrupter, 2 ... bellows, 3 ... fixed electrode, 5 ... movable electrode, 6 ... arc shield, 7 ... ceramic insulating cylinder, 10A, 10B, 10C ... electrical connection part, 12A, 12B ... bushing conductor, 20 ... air insulated operating rod, 21 ... solid insulator, 22 ... spring contact, 23 ... rubber bellows, 30 ... electromagnetic operating unit, 30A, 30B, 30C ... electromagnet of electromagnetic operating unit, 31 ... lever, 32 ... power supply capacitor, 33 ... control board, 34 ... changeover switch, 40A, 40B ... cable head, 41A, 41B ... insulation plug, 42A, 42B ... cable, 43 ... arrester, 50 ... AC circuit, 51 ... DC circuit, 52 ... pantograph circuit, 53 ... ground circuit, 54 arrester circuit, 60 ... inter-circuit connection bus, 61, 62 ... bolt, 70, 70X, 70Y ... unit switch, 70A... first unit switch, 70B second unit switch, 70C ... third unit switch, 71 ... case, 72 ... roof, 73 ... supporting plate, 74 ... U-shaped metal fitting, 100 ... railroad car, 101 ... first car unit, 102 ... second car unit, 103 ... third car unit, 104 ... fourth car unit, 105 ... fifth car unit, 106 ... sixth car unit, 110 ... high voltage joint, 111 ... three branch type high voltage cable head, 107A, 107B, 107C, 107D ... high voltage cable, 108A, 108B ... pantograph

## Claims

1. An electric system for a railroad car including a switching device comprising a unit switch (70, 70A-C) which comprises a vacuum interrupter (1), the vacuum interrupter (1) comprising at least a movable electrode (5) and a fixed electrode (3) disposed so as to face each other, the vacuum interrupter (1) being molded with a solid insulating material, the unit switch (70, 70A-C) having two electrical connection parts (10B, 10C) on the fixed electrode side and one electrical connection part (10A) on the movable electrode side, and the unit switch (70, 70A-C) comprising a current collecting mechanism, such as a spring contact (22) on a movable side of the vacuum interrupter (1), and an insulated operating rod (20) for driving the movable electrode (5) so as to enable opening and closing, and the insulated operating rod (20) being on the movable electrode side, **characterized in that**
the switching device includes three of said unit switches (70, 70A-C), wherein the three unit switches (70, 70A-C) are disposed in parallel, and one of electrical connection parts (10C) on a fixed electrode side of the each unit switch (70, 70A-C) each are electrically connected to one another by an inter-circuit connection bus (60),
three electromagnetic operating units (30) are disposed in parallel to and below the corresponding unit switches (70, 70A-C) so that a movable electrode (5) of the each unit switch (70, 70A-C) is independently opened and closed,
a pantograph circuit (52) is connected to a remaining electrical connection part (10B) on the fixed electrode side of a first unit switch (70A) of the three unit switches (70, 70A-C),
an AC circuit (50) or a DC circuit (51) is connected to the electrical connection part (10A) on the movable electrode side of the first unit switch (70A),
an arrester (43) is connected to a remaining electrical connection part on the fixed electrode side of a second unit switch (70B) of the three unit switches (70, 70A-C),
a circuit other than the one connected to the electrical connection part (10A) on the movable electrode side of the first unit switch (70A) is connected to the electrical connection part (10A) on the movable electrode side of the second unit switch (70B),
a ground circuit (53) is connected to the electrical connection part (10A) on the movable electrode side of a third unit switch (70C) of the three unit switches (70, 70A-C),
each of the electromagnetic operating units (30) includes a power supply capacitor (32) and a control board (33), and an opening and closing signal from a set of the power supply capacitor and the control board in the electromagnetic operating unit (30) is distributed to electromagnets (30A-C) by an exclusive changeover switch (34).

2. The electric system according to claim 1, wherein cables (42A, 42B) fitted to tip ends of cable heads (40A, 40B) are connected to the one electrical connection part (10B) on the fixed electrode side and the one electrical connection part (10A) on the movable electrode side, respectively, and upper parts of the cable heads (40A, 40B) are sealed with insulation plugs (41A, 41B).

3. The electric system according to claim 2, wherein the cable (42A) on the movable electrode side is connected to the AC circuit (50) or the DC circuit (51), and the cable (42B) on the fixed electrode side is connected to the pantograph circuit (52).

4. The electric system according to any one of claims 1 to 3, wherein the insulated operating rod (20) is operated through a lever (31) by the electromagnetic operating unit (30), and opening and closing operation of the fixed electrode (3) and the movable electrode (5) of the vacuum interrupter (1) is performed.

5. The electric system according to claim 4, wherein center axes of the one electrical connection part (10A) on the fixed electrode side, the unit switch (70, 70A-C), the electromagnetic operating unit (30), and the arrester (43) are disposed on the same plane.

6. A railroad car (100) comprising:
a plurality of car units (101-106) supplied with power from a power supply line through a pantograph (108A, 108B), wherein
main power supply apparatuses constituting a power supply unit are dispersedly mounted on a plurality of cars, and the cars are coupled to one another; a cable disposed to pass between the cars to connect the power supply units of the respective car units (101-106); and
an electric system according to any one of claims 1 to 5 with the switching device provided on a middle of the cable wherein the unit switch provides electrical disconnection between the car units (101-106).

7. The railroad car (100) according to claim 6, wherein the switching device is provided on the middle of the cable disposed on a roof (72) of the car and on a same plane as the roof (72) of the car.

8. The railroad car (100) according to claim 6 or 7, wherein the switching device is provided so that an opening and closing direction of the unit (101-106) thereof is a horizontal direction.

9. The railroad car (100) according to any one of claims 6 to 8, wherein the switching device is an electromagnetic operating type of vacuum interrupter (1).

10. The railroad car (100) according to claim 9, wherein the vacuum interrupter (1) and the electromagnetic operating unit (30) are housed in a case (71), and the case (71) is directly fixed on the roof (72) of the car.

11. The railroad car (100) according to claim 10, wherein the case (71) is supported by a supporting plate (73), the supporting plate (73) is fixed to U-shaped metal fittings (74) directly embedded in the roof (72) of the car, by using bolts, and thereby the case (71) is fixed on the roof (72) of the car.

## Patentansprüche

1. Elektrisches System für einen Eisenbahnwagen mit einer Umschaltvorrichtung, die einen Einheitsschalter (70, 70A-C) aufweist, der einen Vakuum-Unterbrechungsschalter (1) umfasst, wobei der Vakuum-Unterbrechungsschalter (1) wenigstens eine bewegbare Elektrode (5) und eine feste Elektrode (3) aufweist, die so angeordnet sind, dass sie einander zugewandt sind, der Vakuum-Unterbrechungsschalter (1) mit einem Festkörper-Isoliermaterial umgossen ist, der Einheitsschalter (70, 70A-C) zwei elektrische Anschlussteile (10B, 10C) auf der Festelektrodenseite und einen elektrischen Anschlussteil (10A) auf der Bewegtelektrodenseite aufweist, und der Einheitsschalter (70, 70A-C) einen Stromsammelmechanismus, wie einen Federkontakt (22), auf einer Bewegtelektrodenseite des Vakuum-Unterbrechungsschalters (1) und eine isolierte Betriebsstange (20) zum Antreiben der bewegbaren Elektrode (5) aufweist, um ein Öffnen und Schließen zu ermöglichen, und wobei die isolierte Betriebsstange (20) auf der Bewegtelektrodenseite angeordnet ist, **dadurch gekennzeichnet, dass**
die Schaltvorrichtung drei der Einheitsschalter (70, 70A-C) aufweist, wobei die drei Einheitsschalter (70, 70A-C) parallel zueinander angeordnet sind und einer der elektrischen Anschlussteile (10C) auf einer Festelektrodenseite jedes Einheitsschalters (70, 70A-C) durch einen Zwischenschaltungs-Verbindungsbus (60) jeweils elektrisch mit einem anderen verbunden ist,
drei elektromagnetische Betriebseinheiten (30) parallel zueinander und unterhalb der entsprechenden Einheitsschalter (70, 70A-C) angeordnet sind, so dass eine bewegbare Elektrode (5) jedes Einheitsschalters (70, 70A-C) unabhängig geöffnet und geschlossen wird,
eine Pantographenschaltung (52) an einen verbleibenden elektrischen Anschlussteil (10B) auf der Festelektrodenseite eines ersten Einheitsschalters (70A) der drei Einheitsschalter (70, 70A-C) angeschlossen ist,
eine AC-Schaltung (50) oder eine DC-Schaltung (51) an den elektrischen Anschlussteil (10A) der Bewegtelektrodenseite des ersten Einheitsschalters (70A) angeschlossen ist,
eine Ableitungseinrichtung (43) an einen verbleibenden elektrischen Anschlussteil auf der Festelektrodenseite eines zweiten Einheitsschalters (70B) der drei Einheitsschalter (70, 70A-C) angeschlossen ist,
eine Schaltung, die verschieden ist von derjenigen, die an den elektrischen Anschlussteil (10A) auf der Bewegtelektrodenseite des ersten Einheitsschalters (70A) angeschlossen ist, an den elektrischen Anschlussteil (10A) auf der Bewegtelektrodenseite des zweiten Einheitsschalters (70B) angeschlossen ist,
eine Erdungsschaltung (53) an den elektrischen Anschlussteil (10A) auf der Bewegtelektrodenseite eines dritten Einheitsschalters (70C) der drei Einheitsschalter (70, 70A-C) angeschlossen ist,
jede der elektromagnetischen Betriebseinheiten (30) einen Leistungsversorgungskondensator (32) und eine Steuerplatte (33) aufweist, und
ein Öffnungs- und Schließ-Signal von einer Gruppe des Leistungsversorgungskondensators und der Steuerplatte in der elektromagnetischen Betriebseinheit (30) durch einen exklusiven Umschaltschalter (34) an Elektromagnete (30A-C) verteilt wird.

2. Elektrisches System nach Anspruch 1, wobei Kabel (42A, 42B), die an Spitzenenden von Kabelköpfen (40A, 40B) angebracht sind, jeweils an einen elektrischen Anschlussteil (10B) auf der Festelektrodenseite und den einen elektrischen Anschlussteil (10A) auf der Bewegtelektrodenseite angeschlossen sind, und obere Bereiche der Kabelköpfe (40A, 40B) mit Isolierstopfen (41A, 41B) abgedichtet sind.

3. Elektrisches System nach Anspruch 2, wobei das Kabel (42A) auf der Bewegtelektrodenseite an die AC-Schaltung (50) oder die DC-Schaltung (51) angeschlossen ist, und das Kabel (42B) auf der Festelektrodenseite an die Pantographenschaltung (52) angeschlossen ist.

4. Elektrisches System nach einem der Ansprüche 1 bis 3, wobei die isolierte Betriebsstange (20) durch einen Hebel (31) durch die elektromagnetische Betriebseinheit (30) betrieben wird, und eine Öffnungs- und Schließ-Operation der festen Elektrode (3) und der bewegbaren Elektrode (5) des Vakuum-Unterbrechungsschalters (1) durchgeführt wird.

5. Elektrisches System nach Anspruch 4, wobei Mittelachsen des einen elektrischen Anschlussteils (10A) auf der Festelektrodenseite, der Einheitsschalter (70, 70A-C), die elektromagnetische Betriebseinheit (30) und die Ableitungseinrichtung (43) in derselben Ebene angeordnet sind.

6. Eisenbahnwagen (100) mit
mehreren Wageneinheiten (101-106), die mit Leistung aus einer Leistungsversorgungsleitung durch einen Pantographen (108A, 108B) versorgt werden, wobei
ein Hauptleistungsversorgungsgerät, das eine Leistungsversorgungseinheit bildet, verteilt auf mehreren Wagen angebracht ist, und die Wagen miteinander gekoppelt sind, wobei ein Kabel dazu angeordnet ist, zwischen den Wagen hindurchzugehen, um die Leistungsversorgungseinheiten der jeweiligen Wageneinheiten (101-106) zu verbinden, und
ein elektrisches System nach einem der Ansprüche 1 bis 5 mit der Umschaltvorrichtung in einer Mitte des Kabels vorgesehen ist, wobei der Einheitsschalter eine elektrische Trennung zwischen den Wageneinheiten (101-106) bereitstellt.

7. Eisenbahnwagen (100) nach Anspruch 6, wobei die Umschaltvorrichtung in der Mitte des Kabels auf einem Dach (72) des Wagens und in einer gleichen Ebene wie das Dach (72) des Wagens vorgesehen ist.

8. Eisenbahnwagen (100) nach Anspruch 6 oder 7, wobei die Umschaltvorrichtung so vorgesehen ist, dass eine Öffnungs- und Schließ-Richtung von deren Einheit (101-106) eine Horizontalrichtung ist.

9. Eisenbahnwagen (100) nach einem der Ansprüche 6 bis 8, wobei die Umschaltvorrichtung ein Vakuum-Unterbrechungsschalter (1) vom elektromagnetischen Betriebstyp ist.

10. Eisenbahnwagen (100) nach Anspruch 9, wobei der Vakuum-Unterbrechungsschalter (1) und die elektromagnetische Betriebseinheit (30) in einem Gehäuse (71) untergebracht sind, und das Gehäuse (71) direkt an dem Dach (72) des Wagens befestigt ist.

11. Eisenbahnwagen (100) nach Anspruch 10, wobei das Gehäuse (71) durch eine Stützplatte (73) gestützt wird, wobei die Stützplatte (73) an U-förmigen Metallelementen (74) befestigt ist, die durch Verwendung von Bolzen direkt in das Dach (72) des Wagens eingebettet sind, und dadurch das Gehäuse (71) auf dem Dach (72) des Wagens befestigt ist.

## Revendications

1. Système électrique pour un wagon de chemin de fer incluant un dispositif de commutation comprenant un commutateur unitaire (70, 70A-C) qui comprend un interrupteur à vide (1), l'interrupteur à vide (1) comprenant au moins une électrode mobile (5) et une électrode fixe (3) disposées de façon à se faire face l'une l'autre, l'interrupteur à vide (1) étant moulé avec un matériau d'isolation plein, le commutateur unitaire (70, 70A-C) ayant deux parties de connexion électrique (10B, 10C) sur le côté d'électrode fixe et une partie de connexion électrique (10A) sur le côté d'électrode mobile, et le commutateur unitaire (70, 70A-C) comprenant un mécanisme de collecte de courant, tel qu'un contact à ressort (22) sur un côté mobile de l'interrupteur à vide (1), et une tige de commande isolée (20) pour entraîner l'électrode mobile (5) de façon à permettre l'ouverture et la fermeture, et la tige de commande isolée (20) étant sur le côté d'électrode mobile, **caractérisé en ce que**
le dispositif de commutation inclut trois desdits commutateurs unitaires (70, 70A-C), dans lequel les trois commutateurs unitaires (70, 70A-C) sont disposés en parallèle, et une des parties de connexion électrique (10C) sur un côté d'électrode fixe de chaque commutateur unitaire (70, 70A-C) sont chacune électriquement connectées les unes aux autres par un bus de connexion inter-circuits (60),
trois unités de commande électromagnétiques (30) sont disposées en parallèle aux et en-dessous des commutateurs unitaires (70, 70A-C) correspondants de telle façon qu'une électrode mobile (5) de chaque commutateur unitaire (70, 70A-C) est indépendamment ouverte et fermée,
un circuit de pantographe (52) est connecté à une partie de connexion électrique (10B) restante sur le côté d'électrode fixe d'un premier commutateur unitaire (70A) des trois commutateurs unitaires (70, 70A-C),
un circuit de CA (50) ou un circuit de CC (51) est connecté à la partie de connexion électrique (10A) sur le côté d'électrode mobile du premier commutateur unitaire (70A),
un parasurtenseur (43) est connecté à une partie de connexion électrique restante sur le côté d'électrode fixe d'un deuxième commutateur unitaire (70B) des trois commutateurs unitaires (70, 70A-C),
un circuit autre que celui connecté à la partie de connexion électrique (10A) sur le côté d'électrode mobile du premier commutateur unitaire (70A) est connecté à la partie de connexion électrique (10A) sur le côté d'électrode mobile du deuxième commutateur unitaire (70B),
un circuit de masse (53) est connecté à la partie de connexion électrique (10A) sur le côté d'électrode mobile d'un troisième commutateur unitaire (70C) des trois commutateurs unitaires (70, 70A-C),
chacune des unités de commande électromagnétiques (30) inclut un condensateur (32) d'alimentation électrique et un tableau de commande (33), et
un signal d'ouverture et de fermeture provenant d'un ensemble du condensateur d'alimentation électrique et du tableau de commande dans l'unité de commande électromagnétique (30) est distribué à des électroaimants (30A-C) par un permutateur (34) exclusif.

2. Système électrique selon la revendication 1, dans lequel des câbles (42A, 42B) ajustés sur des extrémités de têtes (40A, 40B) de câbles sont connectés à la partie de connexion électrique (10B) sur le côté d'électrode fixe et à la partie de connexion électrique (10A) sur le côté d'électrode mobile, respectivement, et des parties supérieures des têtes (40A, 40B) de câbles sont scellées avec des obturateurs d'isolation (41A, 41B).

3. Système électrique selon la revendication 2, dans lequel le câble (42A) sur le côté d'électrode mobile est connecté au circuit de CA (50) ou au circuit de CC (51), et le câble (42B) sur le côté d'électrode fixe est connecté au circuit de pantographe (52).

4. Système électrique selon l'une quelconque des revendications 1 à 3, dans lequel la tige de commande isolée (20) est opérée par l'intermédiaire d'un levier (31) par l'unité de commande électromagnétique (30), et une opération d'ouverture et de fermeture de l'électrode fixe (3) et de l'électrode mobile (5) de l'interrupteur à vide (1) est exécutée.

5. Système électrique selon la revendication 4, dans lequel des axes centraux de la partie de connexion électrique (10A) sur le côté d'électrode fixe, du commutateur unitaire (70, 70A-C), de l'unité de commande électromagnétique (30), et du parasurtenseur (43) sont disposés sur le même plan.

6. Wagon de chemin de fer (100) comprenant :
une pluralité d'unités de wagon (101-106) alimentés avec une énergie électrique provenant d'une ligne d'alimentation électrique par l'intermédiaire d'un pantographe (108A, 108B), dans lequel
des appareils d'alimentation électrique principale constituant une unité d'alimentation électrique sont montés de façon dispersée sur une pluralité de wagons, et les wagons sont couplés les uns aux autres, un câble disposé pour passer entre les wagons pour connecter les unités d'alimentation électrique des unités de wagon (101-106) respectives ; et
un système électrique selon l'une quelconque des revendications 1 à 5 avec le dispositif de commutation prévu sur un milieu du câble dans lequel le commutateur unitaire fournit une déconnexion électrique entre les unités de wagon (101-106).

7. Wagon de chemin de fer (100) selon la revendication 6, dans lequel le dispositif de commutation est prévu sur le milieu du câble disposé sur un toit (72) du wagon et sur un même plan que le toit (72) du wagon.

8. Wagon de chemin de fer (100) selon la revendication 6 ou 7, dans lequel le dispositif de commutation est prévu de telle façon qu'un sens d'ouverture et de fermeture de l'unité (101-106) de celui-ci est un sens horizontal.

9. Wagon de chemin de fer (100) selon l'une quelconque des revendications 6 à 8, dans lequel le dispositif de commutation est un interrupteur à vide (1) de type à commande électromagnétique.

10. Wagon de chemin de fer (100) selon la revendication 9, dans lequel l'interrupteur à vide (1) et l'unité de commande électromagnétique (30) sont logés dans un boîtier (71), et le boîtier (71) est directement fixé sur le toit (72) du wagon.

11. Wagon de chemin de fer (100) selon la revendication 10, dans lequel le boîtier (71) est supporté par une plaque support (73), la plaque support (73) est fixée à des pièces de fixation métalliques en forme de U (74) directement intégrées dans le toit (72) du wagon, en utilisant des boulons, et ainsi le boîtier (71) est fixé sur le toit (72) du wagon.
